# EUROPEAN PATENT SPECIFICATION

(11) **EP 2 724 894 B1**
(45) Date of publication and mention of the grant of the patent: **24.07.2019**
(21) Application number: 12801935.3
(22) Date of filing: 21.06.2012
(51) Int. Cl.: B60R 16/023, B60R 16/03, H03H 7/01, H04B 3/54

(54) **COMMUNICATION SYSTEM AND COMMUNICATION DEVICE**
KOMMUNIKATIONSSYSTEM UND KOMMUNIKATIONSVORRICHTUNG
SYSTÈME DE COMMUNICATION ET DISPOSITIF DE COMMUNICATION

(30) Priority: 21.06.2011 JP 2011137599
(43) Date of publication of application: 30.04.2014
(73) Proprietor: Sumitomo Electric Industries, Ltd., Chuo-ku Osaka-shi Osaka 541-0041 (JP); Sumitomo Wiring Systems, Ltd., Yokkaichi-shi, Mie 510-8503 (JP); AutoNetworks Technologies, Ltd., Yokkaichi-shi, Mie 510-8503 (JP); Toyota Jidosha Kabushiki Kaisha, Toyota-shi, Aichi 471-8571 (JP)
(72) Inventor: OKADA, Ryou, Osaka-shi Osaka 554-0024 (JP); HAGIHARA, Takeshi, Osaka-shi Osaka 554-0024 (JP); KOMATSU, Yutaka, Osaka-shi Osaka 554-0024 (JP); IZUMI,Tatsuya, Osaka-shi Osaka 554-0024 (JP); NII, Kazuhiko, Osaka-shi Osaka 554-0024 (JP); TAKATA, Yousuke, Osaka-shi Osaka 554-0024 (JP); ANDOH, Hiroya, Toyota-shi Aichi 471-8571 (JP); OCHIAI, Yuta, Toyota-shi Aichi 471-8571 (JP); KAMAGA, Ryuichi, Toyota-shi Aichi 471-8571 (JP); IWAI, Atsushi, Toyota-shi Aichi 471-8571 (JP); MIYASHITA, Yukihiro, Toyota-shi Aichi 471-8571 (JP); NAKAGAWA, Nobuyuki, Toyota-shi Aichi 471-8571 (JP)
(74) Representative: Boult Wade Tennant LLP
(86) International application number: PCT/JP2012/065845
(87) International publication number: WO 2012/176832

(56) References cited:
- JP-A- 61 136 327
- JP-A- 2010 123 284
- JP-A- 2011 109 821
- CYRIACUS BLEIJS: 'Low-cost charging systems with full communication capability.' EVS24 INTERNATIONAL BATTERY, HYBRID AND FUEL CELL ELECTRIC VEHICLE SYMPOSIUM 13 May 2009, NORWAY, pages 1 - 9, XP055136618 Retrieved from the Internet: <URL:http://www.ecs-five.ch/parkcharge/docu ments/low_cost.pdf> [retrieved on 2012-07-13]
- PETER VAN DEN BOSSCHE ET AL.: 'Trends and Development Status of IEC Global Electric Vehicle Standards' JOURNAL OF ASIAN ELECTRIC VEHICLE vol. 8, no. 2, December 2010, pages 1409 - 1414, XP055127022 Retrieved from the Internet: <URL:http://www.union-services.com/aevs/140 9-1414.pdf> [retrieved on 2012-07-13]
- M.A.MANNAH ET AL.: 'Power Line communication over feeder cables in an Industrial environment' IEEE INTERNATIONAL SYMPOSIUM ON POWER LINE COMMUNICATIONS AND ITS APPLICATIONS, 2009. ISPLC 2009. 29 March 2009, pages 255 - 260, XP031453696

## Description

### BACKGROUND

### Technical Field

The present invention relates to: a communication system achieving communication between a vehicle such as an electric car and hybrid car and an electricity supply apparatus supplying electricity to the vehicle; and a communication device constituting this communication system.

### Description of Related Art

In recent years, as techniques used for treating global warming, attention is focused on environmental technology. As such environmental technology, for example, electric cars, hybrid cars, and the like in which a secondary battery is mounted and an electric motor is employed as a drive unit in place of a conventional combustion engine that consumes gasoline have been brought into practical use.

Such a vehicle like an electric car and a hybrid car has a configuration that a charging plug connected to an external electricity supply apparatus is connected to the connector of a power feed opening provided in the vehicle so that the secondary battery is allowed to be charged from the outside of the vehicle.

An interface used between a vehicle and an electricity supply apparatus (a charging station) when electricity is to be supplied to the vehicle has already been standardized. For example, a signal line called a control pilot line is provided between an output circuit provided on the electricity supply apparatus side and an input circuit provided on the vehicle side. Then, a rectangular wave signal (a control pilot signal) of given frequency is outputted from the output circuit to the input circuit so that information such as the charging state of the vehicle is allowed to be checked between the electricity supply apparatus and the vehicle (see "SURFACE VEHICLE RECOMMENDED PRACTICE, SAE International (Society of Automotive Engineers International), January 2010").

On the other hand, a communication system is also investigated in which a communication signal is superimposed on the control pilot line so that various kinds of further information is allowed to be transmitted and received between the electricity supply apparatus and the vehicle.

JP-61/136327 relates to insertion of a circuit on a transmission line, which goes to a high impedance and a low impedance by a commercial frequency and a signal frequency respectively, in parallel to both the power source supply end and a last load end of a low voltage distribution line.

"Trends and Development Status of IEC Global Electric Vehicle Standards", Van den Bossche et al., Journal of Asian Electric Vehicle, Vol. 8, No. 2, December 2010, pages 1409-1414 relates to the development and deployment of new technologies, such as electrically propelled vehicles (battery-electrics, hybrids and fuel cell vehicles).

### SUMMARY

Nevertheless, the output and the input of the output circuit and the input circuit transmitting and receiving the control pilot signal are each provided with a capacitor removing a noise or the like. Thus, even when a communication signal is superimposed on the control pilot line, the communication signal is attenuated by the capacitors provided in the output circuit and the input circuit. This causes a possibility of degradation in the transmission speed or degradation in the noise resistance. Further, when the communication circuit superimposing the communication signal is connected to the control pilot line, a possibility also arises that transmission and reception of the control pilot signal is not achieved owing to the influence of the communication circuit.

The present invention has been devised in view of such situations. An object thereof is to provide: a communication system in which attenuation of a communication signal superimposed on a control pilot line is suppressed; and a communication device constituting this communication system.

A communication system is provided in accordance with claim 1. Such a communication system according to a first aspect is a communication system provided with an output circuit that is provided in an electricity supply apparatus supplying electricity to a vehicle and that outputs a rectangular wave signal of given frequency and with an input circuit that is provided in the vehicle and connected to the output circuit through a plurality of signal lines and that receives the rectangular wave signal outputted by the output circuit, whereby a communication signal is superimposed on the signal lines so that communication is achieved between the vehicle and the electricity supply apparatus, the communication system comprising: a first communication unit provided in the electricity supply apparatus and transmitting and receiving a communication signal via a first transformer connected between the signal lines; a second communication unit provided in the vehicle and transmitting and receiving a communication signal via a second transformer connected between the signal lines; a first lowpass filter interposed between the output circuit and the first transformer; and a second lowpass filter interposed between the input circuit and the second transformer.

The communication system according to a second aspect is characterized in that in the first aspect, each of the first and the second lowpass filters includes an inductor connected in series to the signal line.

The communication system according to a third aspect comprises that each of the first and the second lowpass filters includes a resistor connected in parallel to the inductor.

The communication system according to a fourth aspect comprises that each of the first and the second lowpass filters includes a resistor connected in series to the inductor.

The communication system according to a fifth aspect comprises that each of the first and the second lowpass filters, a series circuit composed of a capacitor and a resistor is provided between the signal lines of an output side of the inductor.

The communication system according to a sixth aspect comprises that the output circuit outputs a rectangular wave signal of 1 kHz and a rise time and a fall time of the rectangular wave signal on an input side of the input circuit are 10 µs or shorter.

A communication device is provided in line with claim 7. Such a communication device according to a seventh aspect is a communication device provided with an output circuit outputting a rectangular wave signal of given frequency via a plurality of signal lines, comprising: a communication unit superimposing a communication signal onto the signal lines via a transformer connected between the signal lines and thereby transmitting and receiving a communication signal; and a lowpass filter interposed between the output circuit and the transformer.

The communication device according to an eighth aspect has: a generation unit generating the rectangular wave signal; a voltage detection unit detecting an output voltage of the output circuit; and an adjustment unit, in accordance with the voltage detected by the voltage detection unit, adjusting the rectangular wave signal generated by the generation unit.

The communication device according to a ninth aspect is a communication device provided with an input circuit receiving a rectangular wave signal of given frequency via a plurality of signal lines, comprising: a communication unit superimposing a communication signal onto the signal lines via a transformer connected between the signal lines and thereby transmitting and receiving a communication signal; and a lowpass filter interposed between the input circuit and the transformer.

The communication device according to a tenth aspect has: a resistor unit including a plurality of resistors in which a resistance thereof is adjustable; and an adjustment unit, in order to change a voltage of the resistor unit, adjusting the resistance of the resistor unit.

In the first, the seventh, and the ninth aspects, the first communication unit is provided in the electricity supply apparatus and then superimposes the communication signal on the signal lines via the first transformer connected between the plurality of signal lines (e.g., the control pilot line and the ground line) arranged between the output circuit and the input circuit so as to transmit and receive the communication signal. Further, the second communication unit is provided in the vehicle and then superimposes the communication signal on the signal lines via the second transformer connected between the plurality of signal lines arranged between the output circuit and the input circuit so as to transmit and receive the communication signal. That is, in the first and the second communication units, a transformer is connected between the signal lines and then a voltage is superimposed between the signal lines so that communication is achieved. The communication band used by the first and the second communication units is, for example, 2 to 30 MHz. However, employable communication bands are not limited to this and may be a signal band of 1.0 MHz or higher.

The first lowpass filter is interposed in the signal line between the output circuit and the first transformer and the second lowpass filter is interposed in the signal line between the input circuit and the second transformer. The first and the second lowpass filters allow the rectangular wave signal of given frequency (e.g., 1 kHz) outputted by the output circuit to pass through, and do not allow the communication signal (e.g., 2 to 30 MHz) transmitted and received by the first and the second communication units to pass through. When the first lowpass filter is provided between the first communication unit and the output circuit, the communication signal transmitted by the first communication unit propagates to the second communication unit without attenuation that could be caused by the capacitors of the input circuit and the output circuit. Further, when the second lowpass filter is provided between the second communication unit and the input circuit, the communication signal transmitted by the second communication unit propagates to the first communication unit without attenuation that could be caused by the capacitors of the input circuit and the output circuit. This suppresses attenuation of the communication signal superimposed on the control pilot line.

In the second aspect, each of the first and the second lowpass filters includes an inductor connected in series to the signal line. The inductor has a low impedance at a given frequency (e.g., 1 kHz) outputted by the output circuit and a high impedance for the communication signal (e.g., 2 to 30 MHz) transmitted and received by the first and the second communication units. Thus, by employing merely a simple configuration, the communication signal transmitted and received by the first and the second communication units is cut off and the control pilot signal is passed through.

In the third aspect, each of the first and the second lowpass filters includes a resistor connected in parallel to the inductor. When the resistor is provided, for example, the Q factor (Quality factor) representing the sharpness of the peak of resonance in the resonance circuit formed between the inductor and the capacitor provided in the output circuit or the input circuit is reduced so that unnecessary resonance is suppressed.

In the fourth aspect, each of the first and the second lowpass filters includes a resistor connected in series to the inductor. When the resistor is provided, for example, the Q factor (Quality factor) representing the sharpness of the peak of resonance in the resonance circuit formed between the inductor and the capacitor provided in the output circuit or the input circuit is reduced so that unnecessary resonance is suppressed.

In the fifth aspect, each of the first and the second lowpass filters includes a series circuit composed of a capacitor and a resistor between the signal lines of the output side of the inductor. By virtue of this, the Q factor (Quality factor) representing the sharpness of the peak of resonance in the resonance circuit formed between the inductor and the capacitor provided in the output circuit or the input circuit is reduced so that unnecessary resonance is suppressed.

In the sixth aspect, the output circuit outputs a rectangular wave signal of 1 kHz. The rise time and the fall time of the rectangular wave signal on the input side of the input circuit are 10 µs or shorter. The rise time is defined as the time elapsing in the course that the rectangular wave signal rises from 10% to 90%. Further, the fall time is defined as the time elapsing in the course that the rectangular wave signal falls from 90% to 10%. In order that the rise time and the fall time should be set to be 10 µs or shorter, it is sufficient to set up the values of the first and the second lowpass filters (e.g., the values of the resistors or the inductors). When the rise time and the fall time exceed 10 µs, the rectangular wave signal received by the input circuit is distorted. This prevents the control pilot signal from being received correctly. When the rise time and the fall time are set to be 10 µs or shorter, distortion in the rectangular wave signal is reduced and hence the control pilot signal is received correctly.

In the eighth aspect, provided are: the generation unit generating a rectangular wave signal (a control pilot signal); the voltage detection unit detecting the output voltage of the output circuit; and the adjustment unit, in accordance with the voltage detected by the voltage detection unit, adjusting the rectangular wave signal generated by the generation unit. In the rectangular wave signal, the duty ratio thereof may be changed from 0% to 100%. Thus, for example, a fixed voltage of ±12 V may be used. By virtue of this, the output circuit is allowed to output a desired control pilot signal.

In the tenth aspect, provided are: the resistor unit including a plurality of resistors in which the resistance thereof is adjustable; and the adjustment unit, in order to change the voltage of the resistor unit, adjusting the resistance of the resistor unit. By virtue of this, for example, in accordance with the state of the vehicle, the resistance of the resistor unit is adjusted so that the voltage of the resistor unit is allowed to be changed to a desired value.

According to the present invention, a communication signal is superimposed on a control pilot line so that communication is achieved reliably.

### BRIEF DESCRIPTION OF THE DRAWINGS

FIG. 1 is a block diagram illustrating an example of a configuration of a communication system according to Embodiment 1.
FIG. 2 is an explanation diagram illustrating an example of transmission path attenuation characteristics in communication performed by communication units.
FIG. 3 is an explanation diagram illustrating an example of attenuation characteristics of the control pilot signal outputted by an output circuit.
FIG. 4 is an explanation diagram illustrating an example of rise characteristics of a control pilot signal in an input circuit.
FIG. 5 is an explanation diagram illustrating an example of transmission characteristics on the input circuit side.
FIG. 6 is an explanation diagram illustrating another example of transmission path attenuation characteristics in communication performed by communication units.
FIG. 7 is an explanation diagram illustrating another example of attenuation characteristics of the control pilot signal outputted by an output circuit.
FIG. 8 is an explanation diagram illustrating another example of rise characteristics of a control pilot signal in an input circuit.
FIG. 9 is an explanation diagram illustrating another example of transmission characteristics on the input circuit side.
FIG. 10 is a block diagram illustrating an example of a configuration of a communication system according to Embodiment 2.

### DETAILED DESCRIPTION

### (Embodiment 1)

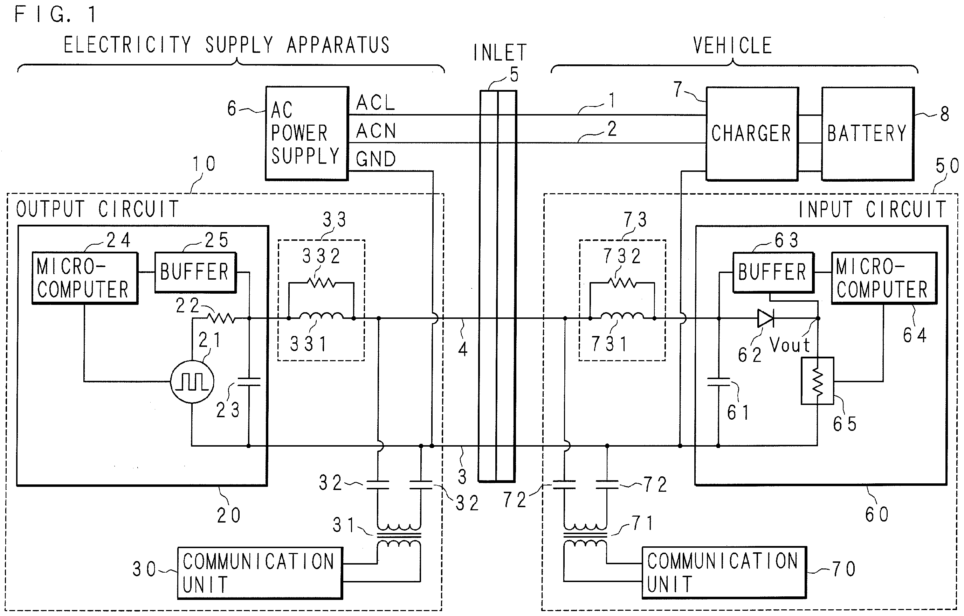

An embodiment of a communication system according to the present invention is described below with reference to the drawings. FIG. 1 is a block diagram illustrating an example of the configuration of the communication system according to Embodiment 1. As illustrated in FIG. 1, a vehicle such as an electric car and a hybrid car is electrically connected to an electricity supply apparatus via an inlet 5 (also referred to as a "power feed opening" or a "connector"). The electricity supply apparatus includes an AC power supply 6. The AC power supply 6 is electrically connected to a charger 7 of the vehicle via a power supply line 1 (ACL) and a power supply line 2 (ACN). The charger 7 is connected to a battery (a secondary battery) 8.

Thus, when a plug (not illustrated) connected to a charging cable from the electricity supply apparatus is connected to the inlet 5, AC electricity is supplied to the vehicle and hence the battery 8 mounted on the vehicle is charged.

The communication system according to the present embodiment includes: a communication device 10 provided in the electricity supply apparatus; and a communication device 50 provided in the vehicle.

The communication device 10 includes: an output circuit 20 outputting a rectangular wave signal (also referred to as a "control pilot signal") of given frequency; a communication unit 30 serving as the first communication unit; a transformer 31; coupling capacitors 32; and a first lowpass filter 33.

The communication device 50 includes: an input circuit 60 to which the control pilot signal is inputted; a communication unit 70 serving as the second communication unit; a transformer 71; coupling capacitors 72; and a second lowpass filter 73.

The output circuit 20 includes: a voltage generation source 21 serving as the generation unit generating a rectangular wave signal (a control pilot signal); a resistor 22; a capacitor 23; a microcomputer 24; and a buffer 25. The voltage generation source 21 generates a rectangular wave signal (a control pilot signal) having, for example, a frequency of 1 kHz and a peak value of ±12 V. The duty ratio of the control pilot signal is, for example, 20%. However, employable values are not limited to this. In the rectangular wave signal, the duty ratio thereof may be changed from 0% to 100%. Thus, for example, a fixed voltage of ±12 V may be used.

The output circuit 20 sends the control pilot signal to the input circuit 60 provided in the vehicle via the resistor 22.

The capacitor 23 is provided, for example, for the purpose of reducing a noise generated in the output circuit 20. For example, the value of the resistor 22 is 1.0 kΩ and the capacitance of the capacitor 23 is 2.2 nF. However, employable values are not limited to these.

The buffer 25 has the function of the voltage detection unit detecting the output voltage of the output circuit 20, and detects the voltage across the capacitor 23 and then outputs the detection result to the microcomputer 24.

The microcomputer 24 has the function of the adjustment unit adjusting the rectangular wave signal generated by the voltage generation source 21. By virtue of this, the output circuit 20 is allowed to output a fixed voltage of ±12 V or a rectangular wave signal (a control pilot signal) having an arbitrary duty ratio (greater than 0 and smaller than 100) and a peak value of ±12 V.

The input circuit 60 includes a capacitor 61, a diode 62, a buffer 63, a microcomputer 64, and a resistor unit 65. The buffer 63 detects the voltage Vout across the resistor unit 65 and then outputs the value to the microcomputer 64. Here, in place of the voltage across the resistor unit 65, the voltage across the capacitor 61 may be detected.

The resistor unit 65 includes a plurality of resistors and a plurality of open-close switches. Then, in response to a signal from the microcomputer 64, the open-close switches are opened or closed so that the resistance is changed (adjusted).

The microcomputer 64 has the function of the adjustment unit adjusting the resistance of the resistor unit 65 for the purpose of changing the voltage Vout of the resistor unit 65. That is, in order to change the voltage Vout in accordance with the state of the vehicle (e.g., a status relevant to charging), the microcomputer 64 changes the resistance of the resistor unit 65. In accordance with the value of the voltage Vout, the electricity supply apparatus and the vehicle are allowed to detect the status relevant to charging.

For example, when the voltage Vout is 12 V, a state is indicated that the charging plug of the vehicle is not yet connected. Further, when the voltage Vout is 9 V, the resistance of the resistor unit 65 is set to be 2.74 kΩ and a state is indicated that the charging plug of the vehicle is connected and charging is ready. Further, when the voltage Vout is 6 V, the resistance of the resistor unit 65 is set to be 882 Ω and a state is indicated that charging is on-going. Further, when the voltage Vout is 3 V, the resistance of the resistor unit 65 is set to be 246 Ω and a state is indicated that charging is on-going and ventilation is necessary in the charging site.

The capacitor 61 is provided, for example, for the purpose of reducing a noise entering the input circuit 60. For example, the resistance of the resistor unit 65 is 2.74 kΩ, 882 Ω, 246 Ω, or the like and the capacitance of the capacitor 61 is 1.8 nF. However, employable values are not limited to these.

The output circuit 20 and the input circuit 60 are electrically connected to each other via a plurality of signal lines (a control pilot line 4 and a ground line 3). Here, the ground line 3 may also be regarded as a control pilot line.

The communication unit 30 and the communication unit 70 perform communication with each other by superimposing a given communication signal on the plurality of signal lines (the control pilot line 4 and the ground line 3) provided between the output circuit 20 and the input circuit 60. The information transmitted and received between the communication unit 30 and the communication unit 70 has larger diversity than the information exchanged by using the control pilot signal, like information relevant to a vehicle ID, charging control (e.g., start or end of charging), management of the charging amount (e.g., boosted charging and notification of the charging amount), management of accounting, and update of navigation.

Each of the communication unit 30 and the communication unit 70 includes a modulation circuit and a demodulator circuit employing a modulation method such as OFDM (Orthogonal Frequency Domain Multiplex) and SS (Spread Spectrum).

The communication band of the communication performed by the communication unit 30 and the communication unit 70 is, for example, 2 to 30 MHz (e.g., Home Plug Green PHY). However, employable communication bands are not limited to this and may be a communication band higher than 1.0 MHz.

A series circuit constructed from the coupling capacitors 32 and 32 and the transformer 31 is connected between the control pilot line 4 and the ground line 3 of the output side of the output circuit 20. Then, the communication unit 30 superimposes a communication signal onto the control pilot line 4 via the transformer 31 and receives a communication signal on the control pilot line 4.

A series circuit constructed from the coupling capacitors 72 and 72 and the transformer 71 is connected between the control pilot line 4 and the ground line 3 of the input side of the input circuit 60. Then, the communication unit 70 superimposes a communication signal onto the control pilot line 4 via the transformer 71 and receives a communication signal on the control pilot line 4.

That is, in the communication unit 30 and the communication unit 70, the transformer 31 or 71 is connected between the signal lines and then a voltage is superimposed between the signal lines so that communication is achieved. This method may be referred to as an inter-line communication method.

The lowpass filter 33 is interposed in the control pilot line 4 between the output circuit 20 and the point of connection of the transformer 31 connected via the coupling capacitor 32.

Further, the lowpass filter 73 is interposed in the control pilot line 4 between the input circuit 60 and the point of connection of the transformer 71 connected via the coupling capacitor 72. The capacitances of the coupling capacitors 32 and 72 are, for example, 500 pF. However, employable values are not limited to this.

The lowpass filters 33 and 73 allow the rectangular wave signal (control pilot signal) of given frequency (e.g., 1 kHz) outputted by the output circuit 20 to pass through, and do not allow the communication signal (e.g., 2 to 30 MHz) transmitted and received by the communication units 30 and 70 to pass through.

When the lowpass filter 33 is provided between the communication unit 30 and the output circuit 20, the communication signal transmitted by the communication unit 30 propagates to the communication unit 70 without attenuation that could be caused by the capacitor 23 of the output circuit 20. Further, the communication signal transmitted by the communication unit 70 propagates to the communication unit 30 without attenuation that could be caused by the capacitor 23 of the output circuit 20.

Further, when the lowpass filter 73 is provided between the communication unit 70 and the input circuit 60, the communication signal transmitted by the communication unit 70 propagates to the communication unit 30 without attenuation that could be caused by the capacitor 61 of the input circuit 60. Further, the communication signal transmitted by the communication unit 30 propagates to the communication unit 70 without attenuation that could be caused by the capacitor 61 of the input circuit 60. Thus, the communication signal is superimposed on the control pilot line 4 so that communication is achieved reliably. Further, distortion is not enhanced in the control pilot signal and errors are avoided in reading the control pilot signal that could be caused by the communication signal.

The lowpass filter 33 includes an inductor 331 connected in series to the control pilot line 4. The inductance of the inductor 331 is, for example, 1.5 mH. However, employable inductance values are not limited to this.

The inductor 331 has a low impedance at a given frequency (e.g., 1 kHz) of the output of the output circuit 20. Further, the inductor 331 has a high impedance for the communication signal (e.g., 2 to 30 MHz) transmitted and received by the communication units 30 and 70. Thus, by employing merely a simple configuration, the communication signal transmitted and received by the communication units 30 and 70 is cut off and the control pilot signal is passed through.

The lowpass filter 73 includes an inductor 731 connected in series to the control pilot line 4. The inductance of the inductor 731 is, for example, 1.5 mH. However, employable inductance values are not limited to this.

The inductor 731 has a low impedance at a given frequency (e.g., 1 kHz) of the output of the output circuit 20. Further, the inductor 731 has a high impedance for the communication signal (e.g., 2 to 30 MHz) transmitted and received by the communication units 30 and 70. Thus, by employing merely a simple configuration, the communication signal transmitted and received by the communication units 30 and 70 is cut off and the control pilot signal is passed through.

Further, the lowpass filter 33 includes a resistor 332 connected in parallel to the inductor 331. The resistance of the resistor 332 is, for example, 1 kΩ. However, employable values are not limited to this. When the resistor 332 is provided, for example, the Q factor (Quality factor) representing the sharpness of the peak of resonance in the resonance circuit formed between the inductor 331 and the capacitor 23 and the like provided in the output circuit 20 is reduced so that unnecessary resonance is suppressed.

Similarly, the lowpass filter 73 includes a resistor 732 connected in parallel to the inductor 731. The resistance of the resistor 732 is, for example, 1 kΩ. However, employable values are not limited to this. When the resistor 732 is provided, for example, the Q factor (Quality factor) representing the sharpness of the peak of resonance in the resonance circuit formed between the inductor 731 and the capacitor 61 and the like provided in the input circuit 60 is reduced so that unnecessary resonance is suppressed.

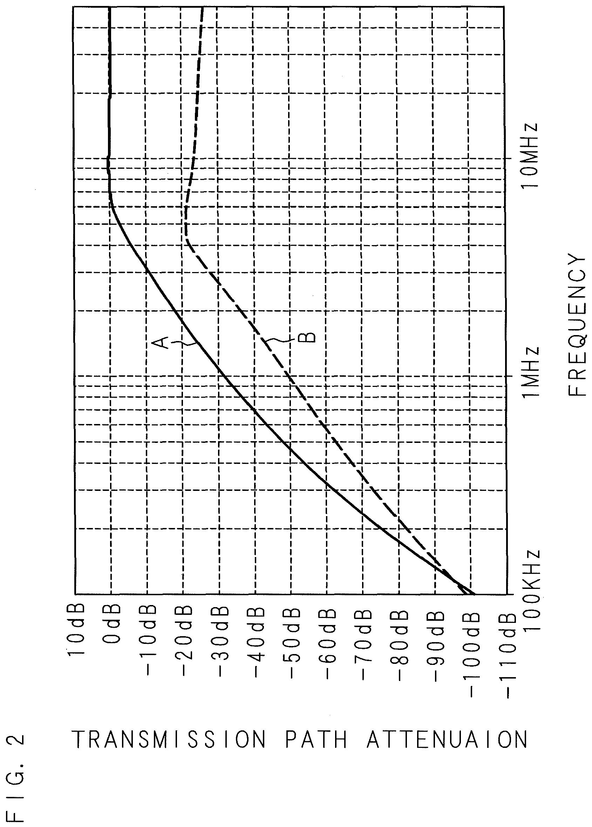

FIG. 2 is an explanation diagram illustrating an example of transmission path attenuation characteristics in the communication performed by the communication units 30 and 70. In FIG. 2, the horizontal axis indicates the frequency and the vertical axis indicates the magnitude of transmission path attenuation (the voltage drop) in the control pilot line 4 between the communication units 30 and 70. Further, in FIG. 2, the curve indicated by symbol A corresponds to a case that the lowpass filters 33 and 73 are provided, and the curve indicated by symbol B corresponds to a case that the lowpass filters 33 and 73 are not provided.

As seen from FIG. 2, when the lowpass filters 33 and 73 are provided, the magnitude of attenuation in the communication signal caused by the communication units 30 and 70 is improved in a range from 150 kHz to 50 MHz in comparison with a case that the lowpass filters 33 and 73 are not provided. Specifically, the improvement is approximately 20dB at 2 MHz and approximately 25dB at 30 MHz. Thus, improvement of approximately 20dB to 25dB is achieved in the range from 2 to 30 MHz which is the communication band of the communication units 30 and 70.

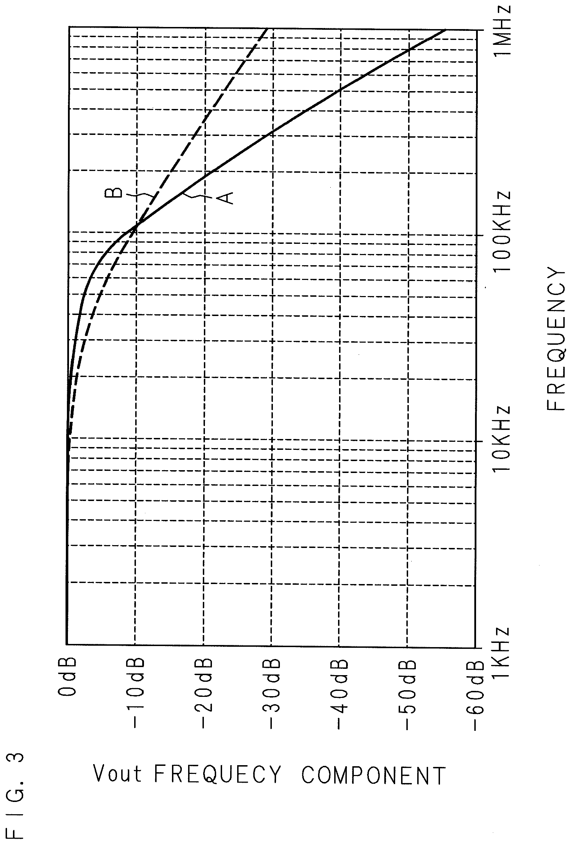

FIG. 3 is an explanation diagram illustrating an example of attenuation characteristics of the control pilot signal outputted by the output circuit 20. In FIG. 3, the horizontal axis indicates the frequency and the vertical axis indicates the frequency component (the spectrum) of the voltage Vout. Further, in FIG. 3, the curve indicated by symbol A corresponds to a case that the lowpass filters 33 and 73 are provided, and the curve indicated by symbol B corresponds to a case that the lowpass filters 33 and 73 are not provided.

As seen from FIG. 3, at frequencies of 10 kHz or lower, attenuation characteristics are the same regardless of the provision or omission of the lowpass filters 33 and 73. That is, even when the lowpass filters 33 and 73 are provided, similarly to a case that the lowpass filters 33 and 73 are not provided, up to the tenth higher harmonics of frequency 1 kHz are allowed to pass through completely without attenuation. Further, in a case that the lowpass filters 33 and 73 are provided, when the frequency is lower than approximately 100 kHz, the magnitude of attenuation of the control pilot signal is reduced in comparison with a case that the lowpass filters 33 and 73 are not provided.

In other words, in a case that the frequency of the control pilot signal is adopted as the fundamental wave, when the cut-off frequencies of the lowpass filters 33 and 73 are set to be, for example, the ninth higher harmonic (9 kHz) or higher, the eleventh higher harmonic (11 kHz) or higher, or alternatively the fifteenth higher harmonic (15 kHz) or higher, waveform distortion or voltage fluctuation is suppressed in the control pilot signal. A higher cut-off frequency has a larger effect in suppressing the waveform distortion or the voltage fluctuation in the control pilot signal.

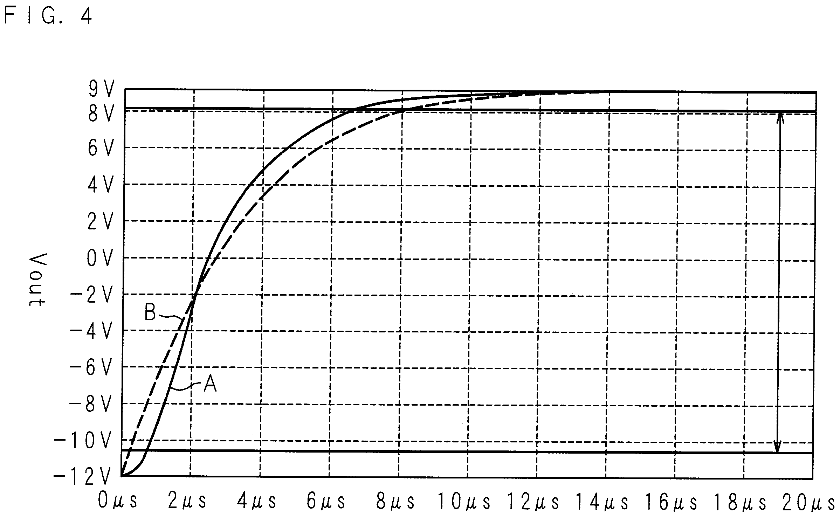

FIG. 4 is an explanation diagram illustrating an example of rise characteristics of the control pilot signal in the input circuit 60. In FIG. 4, the horizontal axis indicates the time and the vertical axis indicates the voltage Vout. Here, in FIG. 4, the voltage Vout indicates the voltage across the capacitor 61. In FIG. 4, the curve indicated by symbol A corresponds to a case that the lowpass filters 33 and 73 are provided, and the curve indicated by symbol B corresponds to a case that the lowpass filters 33 and 73 are not provided. As a result of voltage dividing by the resistances of the output circuit 20 and the input circuit 60, the control pilot signal in the input circuit 60 becomes a rectangular waveform of frequency 1 kHz and voltages +9 V and -12 V. Further, the rise time is defined as the time elapsing in the course that the voltage rises from 10% to 90%.

As seen from FIG. 4, when the lowpass filters 33 and 73 are not provided, the rise time is approximately 7.7 µs. In contrast, when the lowpass filters 33 and 73 are provided, the rise time is approximately 5.6 µs. That is, the rise time of the control pilot signal on the input side of the input circuit 60 is shorter than 10 µs.

In order that the rise time should be set to be 10 µs or shorter, it is sufficient to set up the values of the lowpass filters 33 and 73 (e.g., the values of the inductors 331 and 731 or the resistors 332 and 732). When the rise time exceeds 10 µs, excessively large distortion occurs in the voltage waveform received by the input circuit 20. This prevents the control pilot signal from being received correctly. When the rise time is set to be 10 µs or shorter, distortion in the voltage waveform is reduced and hence the control pilot signal is received correctly. That is, the control pilot signal of rectangular waveform outputted by the output circuit 20 is transmitted to the input circuit 60 without distortion. Here, the example of FIG. 4 has been described for the rise time. However, the same situation holds also for the fall time.

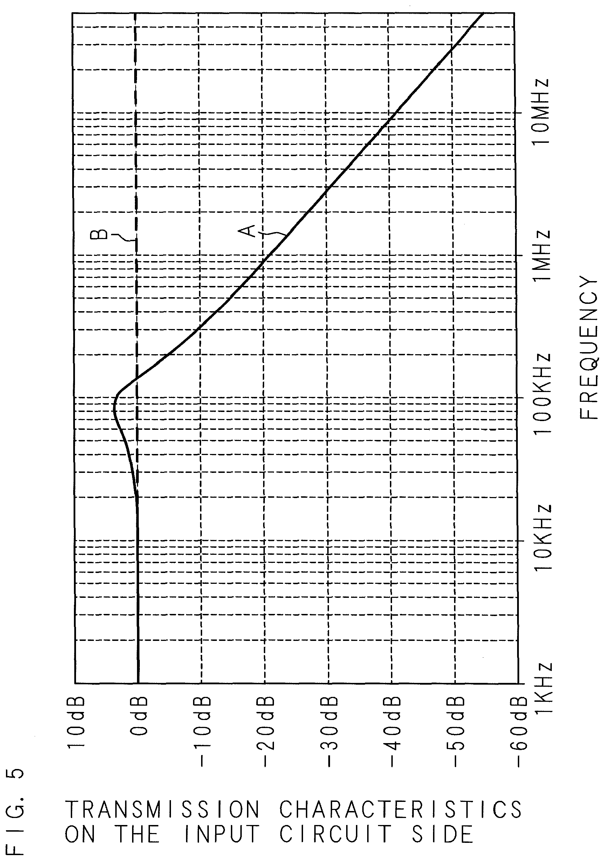

FIG. 5 is an explanation diagram illustrating an example of transmission characteristics on the input circuit side. In FIG. 5, the horizontal axis indicates the frequency. The vertical axis indicates the frequency components of the control pilot signal from the output circuit 20 and the communication signal from the communication units 30 and 70 observed at the voltage Vout on the input circuit 60 side. In FIG. 5, the curve indicated by symbol A corresponds to a case that the lowpass filters 33 and 73 are provided, and the curve indicated by symbol B corresponds to a case that the lowpass filters 33 and 73 are not provided.

As seen from FIG. 5, when the lowpass filters 33 and 73 are not provided, the communication signal from the communication units 30 and 70 invades the input circuit 60 side intact without attenuation. Thus, when voltage detection (e.g., 12 V, 9 V, 6 V, and 3 V) is performed in the buffer 63 and the microcomputer 64, the communication signal acts as a noise of external disturbance and hence causes a possibility of error in the voltage judgment. In contrast, when the lowpass filters 33 and 73 are provided, for example, the communication signal of 2 to 30 MHz is attenuated into a few tenth to a few hundredths. However, the control pilot signal is received by the input circuit 60 almost free from attenuation and distortion. Thus, the voltage judgment and the duty ratio judgment for the control pilot signal are not affected.

In the above-mentioned examples of FIGS. 2 to 5, the self-inductances of the transformers on the coupling capacitors 32 and 72 side and on the communication units 30 and 70 side have been 9.9µH each. The inductances of the inductors 331 and 731 of the lowpass filters 33 and 73 have been 1.5 mH. The resistances of the resistors 332 and 732 have been 1 kΩ. The capacitances of the coupling capacitors 32 and 72 have been 500 pF. However, employable values are not limited to these. The flowing description is given for a case that the self-inductances of the transformers on the coupling capacitors 32 and 72 side are 130µH, the self-inductances of the transformers on the communication units 30 and 70 side are 6µH, the inductances of the inductors 331 and 731 of the lowpass filters 33 and 73 are 470µH, the resistances of the resistors 332 and 732 are 470 Ω, and the capacitances of the coupling capacitors 32 and 72 are 100 pF.

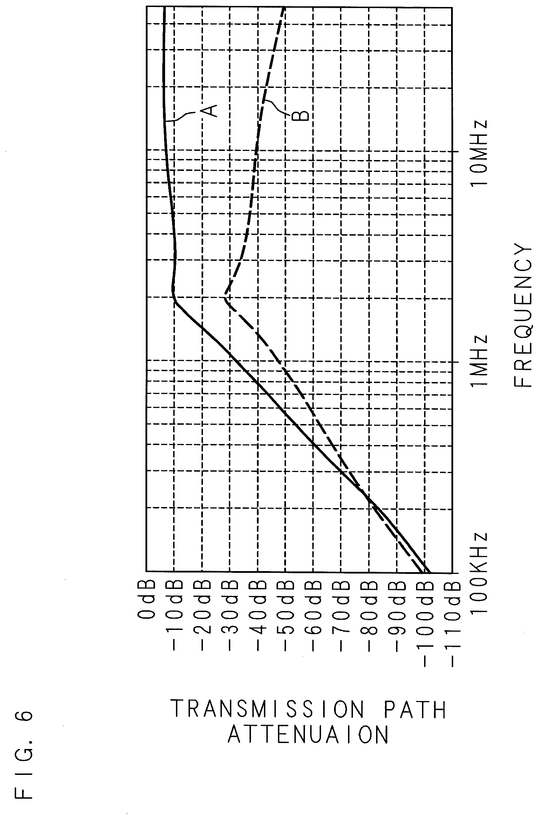

FIG. 6 is an explanation diagram illustrating another communication performed by the communication units 30 and 70. In FIG. 6, the horizontal axis indicates the frequency and the vertical axis indicates the magnitude of transmission path attenuation (the voltage drop) in the control pilot line 4 between the communication units 30 and 70. Further, in FIG. 6, the curve indicated by symbol A corresponds to a case that the lowpass filters 33 and 73 are provided, and the curve indicated by symbol B corresponds to a case that the lowpass filters 33 and 73 are not provided.

As seen from FIG. 6, when the lowpass filters 33 and 73 are provided, the magnitude of attenuation in the communication signal caused by the communication units 30 and 70 is improved in a range from 250 kHz to 50 MHz in comparison with a case that the lowpass filters 33 and 73 are not provided. Specifically, the improvement is approximately 20dB at 2 MHz and approximately 40dB at 30 MHz. Thus, improvement of approximately 20dB to 40dB is achieved in the range from 2 to 30 MHz which is the communication band of the communication units 30 and 70.

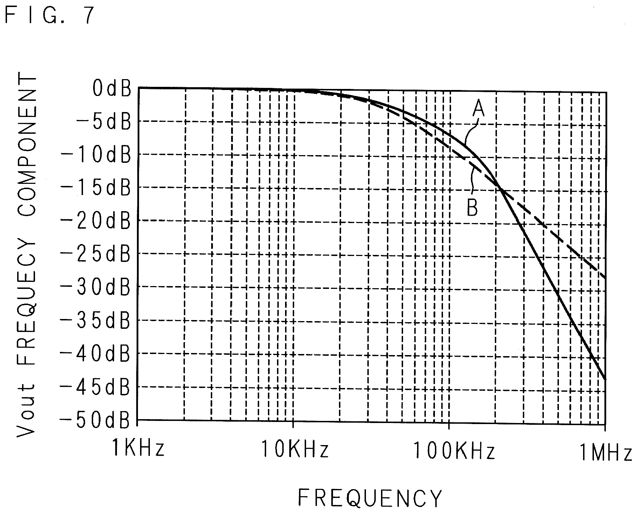

FIG. 7 is an explanation diagram illustrating another example of attenuation characteristics of the control pilot signal outputted by the output circuit 20. In FIG. 7, the horizontal axis indicates the frequency and the vertical axis indicates the frequency component (the spectrum) of the voltage Vout. Further, in FIG. 7, the curve indicated by symbol A corresponds to a case that the the curve indicated by symbol A corresponds to a case that the lowpass filters 33 and 73 are provided, and the curve indicated by symbol B corresponds to a case that the lowpass filters 33 and 73 are not provided.

As seen from FIG. 7, at frequencies of 20 kHz or lower, attenuation characteristics are the same regardless of the provision or omission of the lowpass filters 33 and 73. That is, even when the lowpass filters 33 and 73 are provided, similarly to a case that the lowpass filters 33 and 73 are not provided, up to the twentieth higher harmonics of frequency 1 kHz are allowed to pass through completely without attenuation.

In other words, in a case that the frequency of the control pilot signal is adopted as the fundamental wave, when the cut-off frequency of the lowpass filters 33 and 73 is set to be, for example, the ninth higher harmonic (9 kHz) or higher, the eleventh higher harmonic (11 kHz) or higher, or alternatively the fifteenth higher harmonic (15 kHz) or higher, waveform distortion or voltage fluctuation is suppressed in the control pilot signal. A higher cut-off frequency has a larger effect in suppressing the waveform distortion or the voltage fluctuation in the control pilot signal.

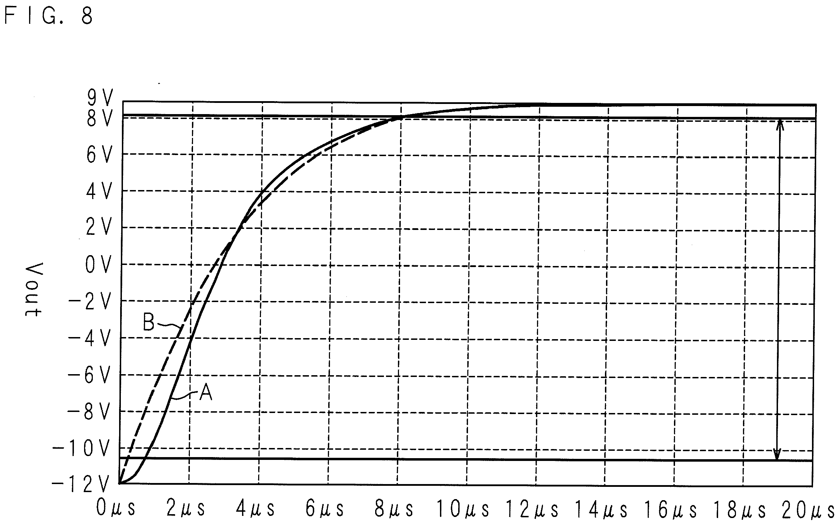

FIG. 8 is an explanation diagram illustrating another example of rise characteristics of the control pilot signal in the input circuit 60. In FIG. 8, the horizontal axis indicates the time and the vertical axis indicates the voltage Vout. Here, in FIG. 8, the voltage Vout indicates the voltage across the capacitor 61. In FIG. 8, the curve indicated by symbol A corresponds to a case that the lowpass filters 33 and 73 are provided, and the curve indicated by symbol B corresponds to a case that the lowpass filters 33 and 73 are not provided. As a result of voltage dividing by the resistances of the output circuit 20 and the input circuit 60, the control pilot signal in the input circuit 60 becomes a rectangular waveform of frequency 1 kHz and voltages +9 V and -12 V. Further, the rise time is defined as the time elapsing in the course that the voltage rises from 10% to 90%.

As seen from FIG. 8, when the lowpass filters 33 and 73 are not provided, the rise time is approximately 7.7 µs. In contrast, when the lowpass filters 33 and 73 are provided, the rise time is approximately 7.2 µs. That is, the rise time of the control pilot signal on the input side of the input circuit 60 is shorter than 10 µs.

In order that the rise time should be set to be 10 µs or shorter, it is sufficient to set up the values of the lowpass filters 33 and 73 (e.g., the values of the inductors 331 and 731 or the resistors 332 and 732). When the rise time exceeds 10 µs, excessively large distortion occurs in the voltage waveform received by the input circuit 60. This prevents the control pilot signal from being received correctly. When the rise time is set to be 10 µs or shorter, distortion in the voltage waveform is reduced and hence the control pilot signal is received correctly. That is, the control pilot signal of rectangular waveform outputted by the output circuit 20 is transmitted to the input circuit 60 without distortion. Here, the example of FIG. 8 has been described for the rise time. However, the same situation holds also for the fall time.

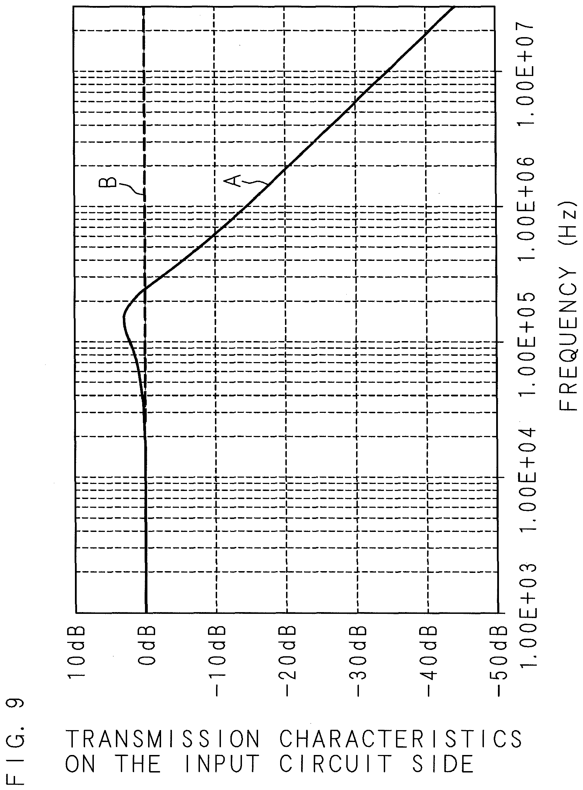

FIG. 9 is an explanation diagram illustrating another example of transmission characteristics on the input circuit side. In FIG. 9, the horizontal axis indicates the frequency. The vertical axis indicates the frequency components of the control pilot signal from the output circuit 20 and the communication signal from the communication units 30 and 70 observed at the voltage Vout on the input circuit 60 side. In FIG. 9, the curve indicated by symbol A corresponds to a case that the lowpass filters 33 and 73 are provided, and the curve indicated by symbol B corresponds to a case that the lowpass filters 33 and 73 are not provided.

As seen from FIG. 9, when the lowpass filters 33 and 73 are not provided, the communication signal from the communication units 30 and 70 invades the input circuit 60 side intact without attenuation. Thus, when voltage detection (e.g., 12 V, 9 V, 6 V, and 3 V) is performed in the buffer 63 and the microcomputer 64, the communication signal acts as a noise of external disturbance and hence causes a possibility of error in the voltage judgment. In contrast, when the lowpass filters 33 and 73 are provided, for example, the communication signal of 2 to 30 MHz is attenuated into a few tenth to a few hundredths. However, the control pilot signal is received by the input circuit 60 almost free from attenuation and distortion. Thus, the voltage judgment and the duty ratio judgment for the control pilot signal are not affected.

According to the present embodiment, when the lowpass filters 33 and 73 are provided, the communication signal transmitted and received by the communication units 30 and 70 is not attenuated in the output circuit 20 or the input circuit 60. This suppresses attenuation of the communication signal superimposed on the control pilot line. Further, this avoids degradation in the transmission speed of communication or degradation in the noise resistance that could be caused by the communication units 30 and 70.

Further, the capacitances of the coupling capacitors 32 and 72 need not be changed. Thus, the impedances of the communication units 30 and 70 measured from the output circuit 20 do not vary. That is, if the capacitances of the coupling capacitors 32 and 72 were increased, the voltage drops in the coupling capacitors 32 and 72 could be reduced in the communication band (2 to 30 MHz in high-speed PLC) and hence the attenuation characteristics could be improved but large distortion would be generated in the control pilot signal. In contrast, actually, since the capacitances of the coupling capacitors 32 and 72 are not changed, occurrence of distortion is avoided in the control pilot signal outputted by the output circuit 20.

In the above-mentioned embodiment, each lowpass filter has been composed of a parallel circuit of an inductor and a resistor. However, employable circuit configurations are not limited to this. That is, an inductor alone may be employed. Alternatively, a series circuit of an inductor and a resistor may be employed. Further, the signal lines consisting of the control pilot line and the ground line have been employed as the communication path for the rectangular wave signal or the communication signal. Instead, any one of both may be constructed from a conductor such as the car body and the housing of the electricity supply apparatus. Further, the lowpass filters may have the following configuration.

### (Embodiment 2)

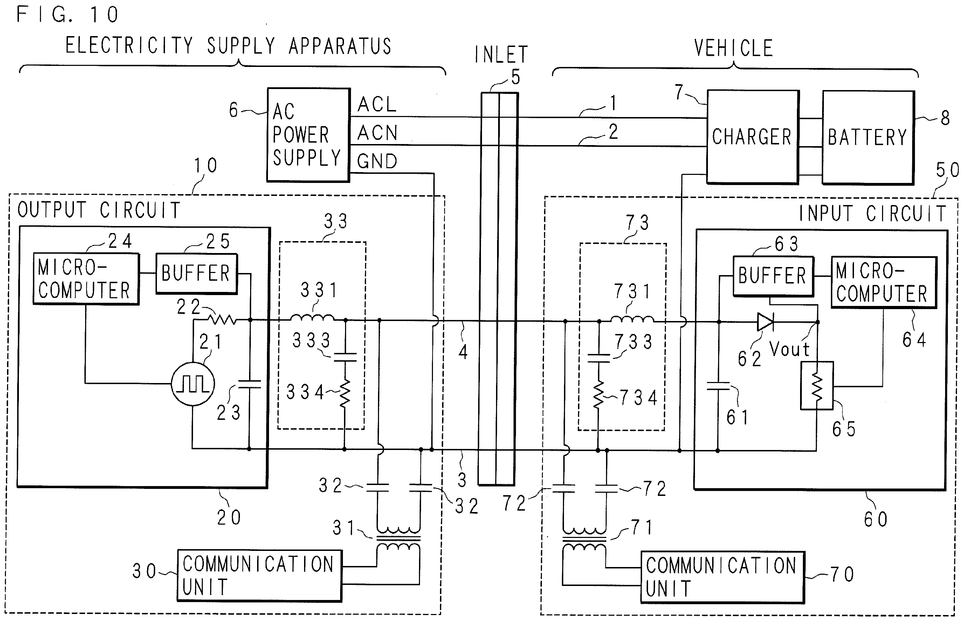

FIG. 10 is a block diagram illustrating an example of the configuration of a communication system according to Embodiment 2. The difference from Embodiment 1 is that the lowpass filter 33 includes an inductor 331 and a series circuit constructed from a capacitor 333 and a resistor 334 connected between the control pilot line 4 and the ground line 3. Similarly, the lowpass filter 73 includes an inductor 731 and a series circuit constructed from a capacitor 733 and a resistor 734 connected between the control pilot line 4 and the ground line 3. Here, like parts to Embodiment 1 are designated by like numerals and their description is omitted.

By virtue of this configuration, the Q factor (Quality factor) representing the sharpness of the peak of resonance in the resonance circuit formed between the inductor and the capacitor provided in the output circuit or the input circuit is reduced so that unnecessary resonance is suppressed.

The present embodiment may be applied to communication performed in a communication band of 2 to 30 MHz. However, adoptable applications are not limited to this. That is, a communication band high than 1.0 MHz may be adopted. Further, the signal lines consisting of the control pilot line and the ground line have been employed as the communication path for the rectangular wave signal or the communication signal. Instead, any one of both may be constructed from a conductor such as the car body and the housing of the electricity supply apparatus.

The embodiments disclosed above shall be regarded as illustrative and not restrictive at all points. The scope of the present invention shall be defined in the claims rather than the description given above. Modifications of any kind that falls within or is equivalent to the scope of the claims shall be incorporated into the present invention.

### DESCRIPTION OF REFERENCE NUMERALS

3 Ground line (control pilot line)
4 Control pilot line
10, 50 Communication device
20 Output circuit
21 Voltage generation source
22 Resistor
23 Capacitor
30, 70 Communication unit
31, 71 Transformer
32, 72 Coupling capacitor
33, 73 Lowpass filter
331, 731 Inductor
332, 334, 732, 734 Resistor
333, 733 Capacitor
60 Input circuit
61 Capacitor
62 Diode
63 Buffer
64 Microcomputer
65 Resistor unit

## Claims

1. A communication system provided with an output circuit (20) that is provided in an electricity supply apparatus supplying electricity to a vehicle and that is configured to output a rectangular wave signal of given frequency and with an input circuit (60) that is provided in the vehicle and connected to the output circuit through a plurality of signal lines (3, 4) and that is configured to receive the rectangular wave signal outputted by the output circuit, whereby a communication signal is superimposed on the signal lines so that communication is achieved between the vehicle and the electricity supply apparatus, the communication system **characterised by** comprising:
a first communication unit (30) provided in the electricity supply apparatus and configured to transmit and receive a communication signal via a first transformer (31) connected between the signal lines (3, 4);
a second communication unit (70) provided in the vehicle and configured to transmit and receive a communication signal via a second transformer (71) connected between the signal lines;
a first lowpass filter (33) interposed between the output circuit and the first transformer; and
a second lowpass filter (73) interposed between the input circuit and the second transformer.

2. The communication system according to claim 1, **characterised in that**
each of the first and the second lowpass filters
includes an inductor (331, 731) connected in series to the signal line.

3. The communication system according to claim 2, **characterised in that**
each of the first and the second lowpass filters
includes a resistor (332, 732) connected in parallel to the inductor.

4. The communication system according to claim 2, **characterised in that**
each of the first and the second lowpass filters
includes a resistor (334, 734) connected in series to the inductor.

5. The communication system according to claim 2, **characterised in that**
in each of the first and the second lowpass filters,
a series circuit composed of a capacitor (333, 733) and a resistor (334, 734) is provided between the signal lines of an output side of the inductor.

6. The communication system according to any one of claims 1 to 5, **characterised in that**
the output circuit is configured to
output a rectangular wave signal of 1 kHz and
a rise time and a fall time of the rectangular wave signal on an input side of the input circuit are 10 µs or shorter.

7. A communication device provided with an output circuit (20) outputting a rectangular wave signal of given frequency via a plurality of signal lines (3, 4), **characterised by** comprising:
a communication unit (30) configured to superimpose a communication signal onto the signal lines (3, 4) via a transformer (31) connected between the signal lines (3, 4) and thereby transmit and receive a communication signal;
a lowpass filter (33) interposed between the output circuit and the transformer;
a generation unit (21), configured to generate the rectangular wave signal;
a voltage detection unit (25), configured to detect an output voltage of the output circuit; and
an adjustment unit (24) configured to, in accordance with the voltage detected by the voltage detection unit, adjust a duty ratio of the rectangular wave signal generated by the generation unit.

## Patentansprüche

1. Ein Kommunikationssystem, das mit einer Ausgangsschaltung (20) versehen ist, die in einer Stromversorgungsvorrichtung bereitgestellt ist, die ein Fahrzeug mit Strom versorgt, und die konfiguriert ist, ein Rechteckwellensignal mit gegebener Frequenz auszugeben, und mit einer Eingangsschaltung (60), die im Fahrzeug bereitgestellt und mit der Ausgangsschaltung über eine Vielzahl von Signalleitungen (3, 4) verbunden ist und die konfiguriert ist, das von der Ausgangsschaltung ausgegebene Rechteckwellensignal zu empfangen, wobei den Signalleitungen ein Kommunikationssignal überlagert ist, so dass eine Kommunikation zwischen dem Fahrzeug und der Stromversorgungsvorrichtung erreicht wird, wobei das Kommunikationssystem **dadurch gekennzeichnet ist, dass** es umfasst:
eine erste Kommunikationseinheit (30), die in der Stromversorgungsvorrichtung vorgesehen und konfiguriert ist, ein Kommunikationssignal über einen ersten Transformator (31) zu senden und zu empfangen, der zwischen den Signalleitungen (3, 4) verbunden ist;
eine zweite Kommunikationseinheit (70), die in dem Fahrzeug bereitgestellt ist und konfiguriert ist, ein Kommunikationssignal über einen zweiten Transformator (71) zu senden und zu empfangen, der zwischen den Signalleitungen geschaltet ist;
einen ersten Tiefpassfilter (33), der zwischen der Ausgangsschaltung und dem ersten Transformator angeordnet ist; und
einen zweiten Tiefpassfilter (73), der zwischen der Eingangsschaltung und dem zweiten Transformator angeordnet ist.

2. Das Kommunikationssystem nach Anspruch 1, **dadurch gekennzeichnet, dass**
jeder des ersten und zweiten Tiefpassfilters einen Induktor (331, 731) beinhaltet, der in Reihe mit der Signalleitung geschaltet ist.

3. Das Kommunikationssystem nach Anspruch 2, **dadurch gekennzeichnet, dass**
jeder des ersten und zweiten Tiefpassfilters einen Widerstand (332, 732) beinhaltet, der parallel zum Induktor geschaltet ist.

4. Das Kommunikationssystem nach Anspruch 2,
**dadurch gekennzeichnet, dass**
jeder des ersten und zweiten Tiefpassfilters einen Widerstand (334, 734) beinhaltet, der in Reihe mit dem Induktor verbunden ist.

5. Das Kommunikationssystem nach Anspruch 2, **dadurch gekennzeichnet, dass**
in jedem des ersten und zweiten Tiefpassfilters zwischen den Signalleitungen einer Ausgangsseite des Induktors eine Reihenschaltung aus einem Kondensator (333, 733) und einem Widerstand (334, 734) vorgesehen ist.

6. Das Kommunikationssystem nach einem der Ansprüche 1 bis 5, **dadurch gekennzeichnet, dass**
die Ausgangsschaltung konfiguriert ist,
ein Rechtecksignal von 1 kHz ausgeben und
eine Anstiegszeit und eine Abfallzeit des Rechtecksignals auf einer Eingangsseite der Eingangsschaltung 10 us oder kürzer sind.

7. Eine Kommunikationsvorrichtung, die mit einer Ausgangsschaltung (20) versehen ist, die ein Rechteckwellensignal gegebener Frequenz über eine Vielzahl von Signalleitungen (3, 4) ausgibt, **dadurch gekennzeichnet, dass** sie umfasst:
eine Kommunikationseinheit (30), die konfiguriert ist, den Signalleitungen (3, 4) über einen Transformator (31), der zwischen den Signalleitungen (3, 4) geschaltet ist, ein Kommunikationssignal zu überlagern und dadurch ein Kommunikationssignal zu senden und zu empfangen;
einen Tiefpassfilter (33), der zwischen der Ausgangsschaltung und dem Transformator angeordnet ist; eine Erzeugungseinheit (21), die konfiguriert ist, das Rechtecksignal zu erzeugen;
eine Spannungserfassungseinheit (25), die konfiguriert ist, eine Ausgangsspannung der Ausgangsschaltung zu erfassen; und
eine Einstellungseinheit (24), die konfiguriert ist, gemäß der von der Spannungserfassungseinheit erfassten Spannung ein Tastverhältnis des von der Erzeugungseinheit erzeugten Rechtecksignals einzustellen.

## Revendications

1. Système de communication équipé d'un circuit de sortie (20) qui est fourni dans un appareil d'alimentation en électricité alimentant en électricité un véhicule et qui est configuré pour délivrer en sorte un signal à onde rectangulaire de fréquence donnée, et d'un circuit d'entrée (60) qui est fourni dans le véhicule et connecté au circuit de sortie par l'intermédiaire d'une pluralité de lignes de signal (3, 4) et qui est configuré pour recevoir le signal à onde rectangulaire délivré en sortie par le circuit de sortie, ce par quoi un signal de communication est superposé sur les lignes de signal de telle sorte qu'une communication est obtenue entre le véhicule et l'appareil d'alimentation en électricité, le système de communication étant **caractérisé en ce qu'**il comprend :
une première unité de communication (30) fournie dans l'appareil d'alimentation en électricité et configurée pour émettre et recevoir un signal de communication via un premier transformateur (31) connecté entre les lignes de signal (3, 4) ;
une seconde unité de communication (70) fournie dans le véhicule et configurée pour émettre et recevoir un signal de communication via un second transformateur (71) connecté entre les lignes de signal ;
un premier filtre passe-bas (33) interposé entre le circuit de sortie et le premier transformateur ; et
un second filtre passe-bas (73) interposé entre le circuit d'entrée et le second transformateur.

2. Système de communication selon la revendication 1, **caractérisé en ce que**
chacun des premier et second filtres passe-bas
inclut une inductance (331, 731) connectée en série à la ligne de signal.

3. Système de communication selon la revendication 2, **caractérisé en ce que**
chacun des premier et second filtres passe-bas
inclut une résistance (332, 732) connectée en parallèle à l'inductance.

4. Système de communication selon la revendication 2, **caractérisé en ce que**
chacun des premier et second filtres passe-bas
inclut une résistance (334, 734) connectée en série à l'inductance.

5. Système de communication selon la revendication 2, **caractérisé en ce que**
dans chacun des premier et second filtres passe-bas,
un circuit en série constitué d'un condensateur (333, 733) et d'une résistance (334, 734) est fourni entre les lignes de signal d'un côté de sortie de l'inductance.

6. Système de communication selon l'une quelconque des revendications 1 à 5, **caractérisé en ce que**
le circuit de sortie est configuré pour
délivrer en sortie un signal à onde rectangulaire de 1 kHz et
un temps de montée et un temps de descente du signal à onde rectangulaire sur un côté d'entrée du circuit d'entrée sont de 10 µs ou inférieurs.

7. Dispositif de communication équipé d'un circuit de sortie (20) délivrant en sortie un signal à onde rectangulaire de fréquence donnée via une pluralité de lignes de signal (3, 4), **caractérisé en ce qu'**il comprend :
une unité de communication (30) configurée pour superposer un signal de communication sur les lignes de signal (3, 4) via un transformateur (31) connecté entre les lignes de signal (3, 4) et ainsi émettre et recevoir un signal de communication ;
un filtre passe-bas (33) interposé entre le circuit de sortie et le transformateur ;
une unité de génération (21), configurée pour générer le signal à onde rectangulaire ;
une unité de détection de tension (25), configurée pour détecter une tension de sortie du circuit de sortie ; et
une unité de réglage (24) configurée pour, en fonction de la tension détectée par l'unité de détection de tension, régler un rapport cyclique du signal à onde rectangulaire généré par l'unité de génération.
